# EUROPEAN PATENT SPECIFICATION

(11) **EP 4 265 901 B1**
(45) Date of publication and mention of the grant of the patent: **04.03.2026**
(21) Application number: 23168575.1
(22) Date of filing: 18.04.2023
(51) Int. Cl.: F16F 7/116, F02F 7/00

(54) **ENGINE AND STRADDLED VEHICLE INCLUDING SAME**
MOTOR UND GRÄTSCHSITZFAHRZEUG DAMIT
MOTEUR ET VÉHICULE À ENFOURCHER LE COMPRENANT

(30) Priority: 21.04.2022 JP 2022070390
(43) Date of publication of application: 25.10.2023
(73) Proprietor: Yamaha Hatsudoki Kabushiki Kaisha, Iwata-shi, Shizuoka-ken 438-8501 (JP)
(72) Inventor: Sudoh, Takehiko, Iwata-shi (JP); Kitano, Kouki, Iwata-shi (JP); Uno, Akinobu, Iwata-shi (JP)
(74) Representative: Grünecker Patent- und Rechtsanwälte PartG mbB

(56) References cited:
- JP-A- 2016 128 659
- JP-A- 2019 120 166
- JP-A- S62 237 035
- JP-A- S62 288 797
- US-A- 2 484 241

## Description

The present invention relates to an engine according to the preamble of independent claim 1 and a straddled vehicle including the engine. Such an engine can betaken from the prior art document JP 2019 120 166 A. Said prior art discloses an engine with a crankshaft and a crankcase accommodating the crankshaft. A vibration sensor is provided for detection of vibration. A dynamic damper is provided at the crankcap. The dynamic damper includes a damper mass and a supporter that has an elastic object, and vibratably supports the damper mass at the crankcap such that the damper mass is vibratable by the elastic object, wherein the vibration sensor is a three dimensional sensor for detecting related vibration in the mass.

When vibration generated in a crankshaft during an operation of an engine is transmitted to a crankcase, noise is generated from a power unit or the like including the crankcase. In order to reduce such noise, JP 2002-005235 A proposes a structure for preventing vibration of a crankshaft. In the structure for preventing vibration, a dynamic damper is provided at the end portion of the crankshaft.

More specifically, in the engine described in JP 2002-005235 A, a centrifugal oil strainer is attached to one end portion of the crankshaft extending in one direction. The dynamic damper is attached to the oil strainer via a bowl-shaped attachment plate. The dynamic damper is constituted by an annular elastic object and an annular damper weight, and is configured to be unitized with the attachment plate by baking of the elastic object on the attachment plate.

Further, in the above-mentioned dynamic damper, the antivibration performance of the damper weight is set in consideration of the fact that the rigidity of the crankcase varies depending on a direction. The antivibration performance of the damper weight needs to be set in consideration of not only the ratio of the mass of a damper weight to the mass of a crankshaft and the composition of the elastic object but also the arrangement of the peripheral members of the damper weight, the allowable size of the damper weight, and the like. Therefore, it is not easy to provide the dynamic damper at the crankshaft rotating at high speed and appropriately set the antivibration performance. Therefore, it is not easy to fabricate the above-mentioned engine.

Further, in the engine described in JP 2002-005235 A, vibration that is reduced by the dynamic damper is transmitted from the crankshaft to the crankcase. The rigidity of the crankcase is defined based on the shape and size of the crankcase. That is, the rigidity of a plurality of types of crankcases respectively provided in a plurality of types of engines do not necessarily have a common directional feature. Therefore, depending on the configuration of the crankcase, the vibration reduced by the dynamic damper may be transmitted to the crankcase, and thus excessive noise may be generated from a power unit or the like including the crankcase.

An object of the present invention is to provide an engine which can be easily fabricated and can reduce generation of noise, and a straddled vehicle including the engine. According to the present invention said object is solved by an engine having the features of independent claim 1. Preferred embodiments are laid down in the dependent claims.
(1) An engine according to the general teaching includes a crankshaft, a crankcase accommodating the crankshaft, and a dynamic damper provided at the crankcase, wherein the dynamic damper includes a damper mass, and a supporter that has an elastic object, and vibratably supports the damper mass at the crankcase such that the damper mass is vibratable by the elastic object on one straight line that is orthogonal to a center axis of the crankshaft and parallel to a direction of bending vibration generated in the crankshaft.
   In the engine, the dynamic damper is provided in the crankcase. In this case, because it is not necessary to provide the dynamic damper at the crankshaft that rotates at high speed, the degree of freedom in design and attachment of the dynamic damper is improved, and the engine can be easily fabricated. Further, with the above-mentioned configuration, the damper mass of the dynamic damper vibrates on the one straight line parallel to the direction of the bending vibration of the crankshaft. Thus, the vibration transmitted to the peripheral members of the crankshaft due to the bending vibration of the crankshaft is efficiently absorbed by the dynamic damper. Therefore, at least part of vibration that causes noise generated from the power unit including the crankcase and its peripheral members is efficiently absorbed by the dynamic damper. As a result, the engine which is easily fabricated and in which generation of noise is reduced is realized.
(2) According to the present invention, the supporter is vibratably support the damper mass at the crankcase such that an elastic force of the elastic object is exerted on the damper mass on the one straight line, while the supporter restricts a vibration direction of the damper mass such that the damper mass is not vibratable on another straight line that intersects with the one straight line.
   With the above-mentioned configuration, the damper mass of the dynamic damper vibrates only on the one straight line parallel to the direction of the bending vibration of the crankshaft. Thus, vibration that causes noise is more efficiently absorbed.
(3) The supporter may have a first leaf spring portion and a second leaf spring portion as the elastic objects, the first leaf spring portion and the second leaf spring portion may be provided at the crankcase to be arranged at a distance from each other in a direction parallel to the one straight line, and each of the first leaf spring portion and the second leaf spring portion may be provided to connect the crankcase and the damper mass to each other.
   The leaf spring has a thickness that is smaller than that of other elastic members such as a coil spring and a rubber member. Therefore, with the above-mentioned configuration, it is possible to restrict the vibration direction of the damper mass with respect to the crankcase without requiring an excessive installation space.
(4) Each of the first leaf spring portion and the second leaf spring portion may be formed in a flat plate shape having one surface and another surface that face in mutually opposite directions, and may be provided at the crankcase such that the one surface and the another surface are orthogonal to the one straight line. In this case, each of the first leaf spring portion and the second leaf spring portion is bent in a plane orthogonal to the center axis of the crankshaft, so that the damper mass vibrates on the one straight line with a simple configuration.
(5) The crankcase may have an attachment surface that is orthogonal to a center axis of the crankshaft, the supporter may have a first portion and a second portion attached to the attachment surface, and the crankshaft may be located in a region between a portion to which the first portion of the supporter is attached in the attachment surface and a portion to which the second portion of the supporter is attached in the attachment surface when being viewed in a direction extending along the center axis of the crankshaft.
   In this case, the damper mass can be arranged in the vicinity of the crankshaft when being viewed in the direction extending along the center axis of the crankshaft. For example, the damper mass can be arranged to overlap with the crankshaft. Thus, instability of the center of gravity of the engine due to vibration of the damper mass is suppressed as compared with a case in which the damper mass is provided at a position greatly deviated from the crankshaft.
(6) The dynamic damper may further include a rubber member provided between the attachment surface of the crankcase and the damper mass. In this case, the rubber member absorbs the vibration of the damper mass caused by the elastic forces of the first leaf spring portion and the second leaf spring portion. Thus, generation of noise due to strong vibration of the damper mass is suppressed.
(7) The engine may further include a bearing that supports the crankshaft in the crankcase, wherein the crankcase may have a fixing portion to which the bearing is fixed, and the dynamic damper may be attached to the fixing portion.
   The fixing portion of the crankcase supports the crankshaft via the bearing. Therefore, vibration is easily transmitted from the crankshaft to the fixing portion. With the above-mentioned configuration, because the dynamic damper is attached to the fixing portion, large part of vibration transmitted from the crankshaft to the crankcase is efficiently absorbed by the dynamic damper.
(8) A straddled vehicle according to another aspect includes a main body having a drive wheel, and the above-mentioned engine that generates motive power for rotating the drive wheel.

The straddled vehicle includes the above-mentioned engine. This facilitates fabrication of the straddled vehicle. Further, at least part of vibration that causes noise generated from the power unit including the crankcase and its peripheral members is efficiently absorbed by the dynamic damper. As a result, the straddled vehicle which is easily fabricated and in which generation of noise is reduced is realized.

Other features, elements, characteristics, and advantages of the present disclosure will become more apparent from the following description of preferred embodiments of the present disclosure with reference to the attached drawings.

### BRIEF DESCRIPTION OF THE DRAWING

Fig. 1 is a right side view of a motorcycle according to a preferred embodiment;
Fig. 2 is a side view of a power unit of Fig. 1 as viewed from a position farther rightward than the motorcycle;
Fig. 3 is a diagram for explaining bending vibration generated in a crankshaft of Fig. 2;
Fig. 4 is an exploded perspective view for explaining the configurations of a crankcase and a dynamic damper of Fig. 2;
Fig. 5 is a partially enlarged side view of a right case member of Fig. 4;
Fig. 6 is a diagram showing an inner surface of a damper mass;
Fig. 7 is a front view of a support member of Fig. 4;
Fig. 8 is a side view of the support member of Fig. 7 as viewed in a first direction;
Fig. 9 is a side view of the support member of Fig. 7 as viewed in a second direction;
Fig. 10 is a cross sectional view of the power unit of Fig. 2 taken along the line A-A;
Fig. 11 is a cross sectional view of the power unit of Fig. 2 taken along the line B-B;
Fig. 12 is a schematic diagram for explaining an operation of the dynamic damper when vibration transmitted from the crankshaft to the crankcase is absorbed; and
Fig. 13 is a schematic diagram for explaining the operation of the dynamic damper when the vibration transmitted from the crankshaft to the crankcase is absorbed.

### DETAILED DESCRIPTION

An engine and a straddled vehicle including the engine according to a preferred embodiment will be described below with reference to the drawings. A motorcycle will be described as one example of the straddled vehicle.

### <1> Schematic Configuration of Motorcycle

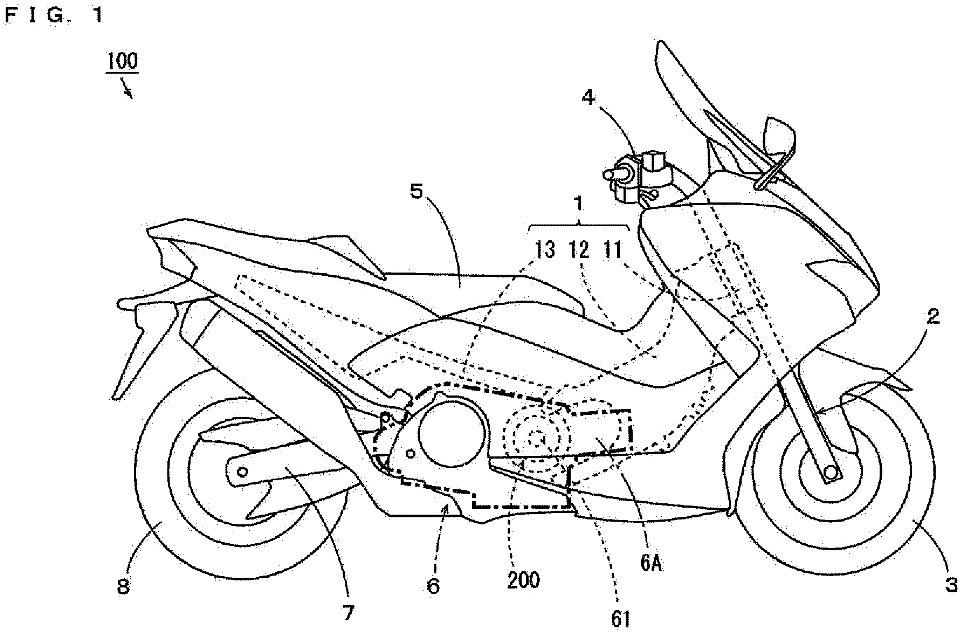

Fig. 1 is a right side view of a motorcycle according to the preferred embodiment. In Fig. 1, the motorcycle 100 standing up to be perpendicular to the road surface is shown. The motorcycle 100 of Fig. 1 includes a metallic body frame 1. The body frame 1 includes a head pipe 11 and a plurality of frame members. In Fig. 1, two frame members 12, 13 of the plurality of frame members are shown. The head pipe 11 is located in a front portion of the vehicle. The frame members 12, 13 are provided so as to extend rearwardly of the vehicle from the head pipe 11.

A front fork 2 is provided at the head pipe 11 to be rotatable about the center axis of the head pipe 11. A front wheel 3 is rotatably supported at the lower end portion of the front fork 2. A handle 4 is provided at the upper end portion of the front fork 2.

The body frame 1 supports a plurality of constituent elements of the motorcycle 100 including a seat 5, a power unit 6 and a rear arm 7. The seat 5 is provided in a substantially central upper portion of the motorcycle 100 in a front-and-rear direction. The power unit 6 includes an engine 6A and is provided at a substantially central lower portion of the motorcycle 100 in the front-and-rear direction. A side cover made of resin is provided so as to interpose the front half portion (the portion of the engine 6A) of the power unit 6 in a left-and-right direction of the motorcycle 100.

A rear arm 7 is provided to extend rearwardly from a position in the vicinity of the rear end portion of the power unit 6. The rear arm 7 is supported at the body frame 1 with use of a pivot shaft (not shown). A rear wheel 8 is rotatably supported at the rear end portion of the rear arm 7. The rear wheel 8 is rotated as a drive wheel by the motive power generated by the engine 6A of the power unit 6.

During an operation of the engine 6A, noise may be generated from the motorcycle 100 as the crankshaft 61 included in the engine 6A rotates. As such, in the power unit 6 according to the present embodiment, a dynamic damper 200 is provided as the configuration for reducing noise generated during an operation of the engine. The mechanism of generation of noise and the specific configuration and function of the dynamic damper 200 will be described.

### <2> Basic Configuration of Power Unit 6 and Bending Vibration of Crankshaft

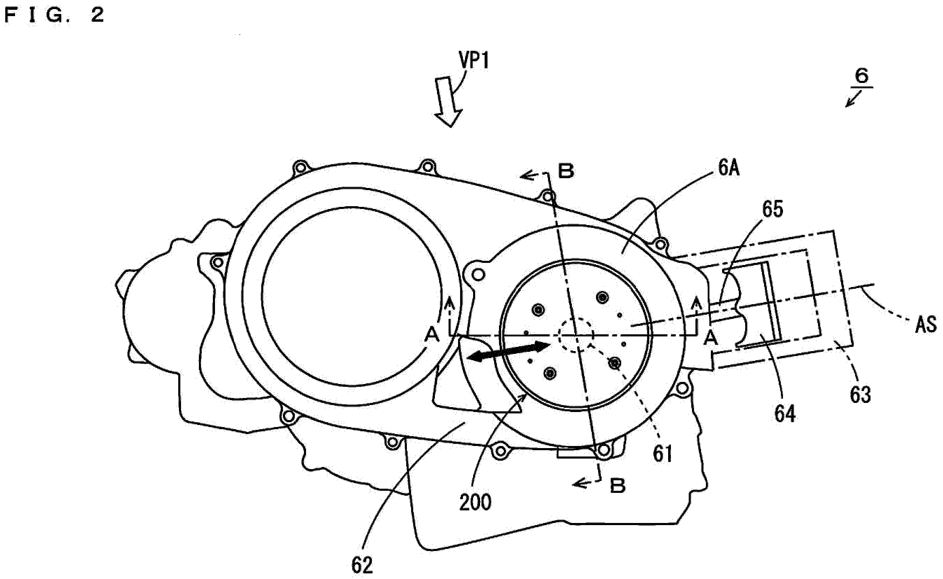

Fig. 2 is a side view of the power unit 6 of Fig. 1 as viewed from a position farther rightward than the motorcycle. As described above, the power unit 6 includes the engine 6A. The engine 6A has a cylinder head 63. The cylinder head 63 has the configuration in which two cylinders are arranged in the left-and-right direction of the motorcycle 100. In Fig. 2, the outer shape of the cylinder head 63 is schematically shown by the one-dot and dash lines.

The power unit 6 includes a crankcase 62. The crankcase 62 according to the present embodiment accommodates the crankshaft 61. The crankshaft 61 extends in the left-and-right direction of the motorcycle 100 in the crankcase 62.

Two pistons 64 are connected to the crankshaft 61 via two connecting rods 65, respectively. The two pistons 64 of the crankshaft 61 are respectively provided so as to be reciprocatable in the two cylinders of the cylinder head 63. In Fig. 2, a right piston 64 and a right connecting rod 65 located in the cylinder head 63 are indicated by the solid lines. Further, in Fig. 2, the virtual straight line passing through the center axis of a right cylinder of the cylinder head 63 is indicated by the two-dots and dash line as a cylinder axis AS.

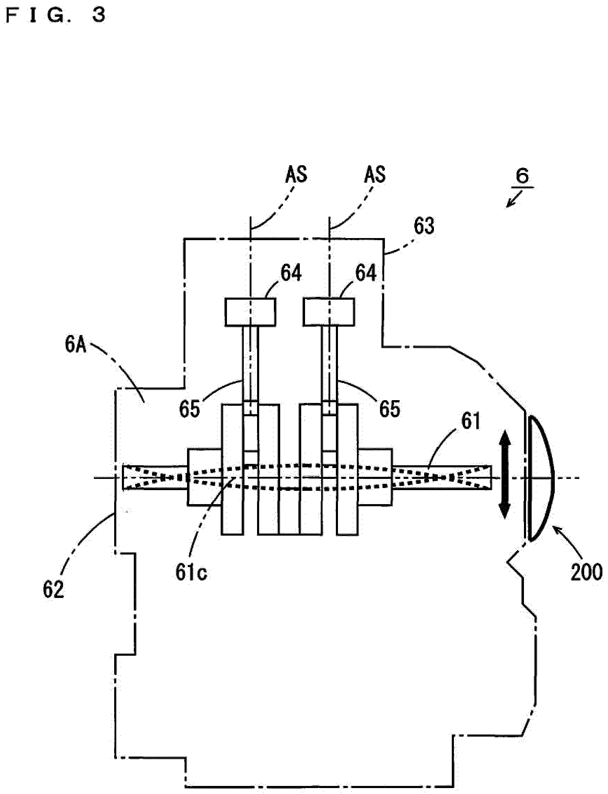

During an operation of the engine 6A, bending vibration is generated in the crankshaft 61. Fig. 3 is a diagram for explaining the bending vibration generated in the crankshaft 61 of Fig. 2. In Fig. 3, the outer shape of the power unit 6 as viewed from a position above the power unit 6 in the direction indicated by the outlined arrow VP1 of Fig. 2 is shown. Further, in Fig. 3, the crankshaft 61, the two pistons 64 and the two connecting rods 65 provided in the power unit 6 are indicated by the solid lines. Further, in Fig. 3, the virtual straight line passing through the center axis of the crankshaft 61 is indicated by the two-dots and dash line as a crank axis 61c. The direction of the outlined arrow VP1 of Fig. 2 is the direction orthogonal to the cylinder axis AS when the power unit 6 is viewed in the direction extending along the center axis (crank axis 61c) of the crankshaft 61.

When the crankshaft 61 rotates during an operation of the engine 6A, the two pistons 64 connected to the crankshaft 61 reciprocate along the cylinder axis AS. In this case, a bending moment is generated in the crankshaft 61 in a predetermined period by a pressure of a fuel-air mixture exerted on each piston 64 and an inertial force. Thus, as indicated by the thick dotted lines in Fig. 3, in the crankshaft 61, the center portion thereof is bent in the direction toward the cylinder head 63 and then in the direction away from the cylinder head 63, repeatedly.

As a result, in the present example, as indicated by the thick solid arrows in Figs. 2 and 3, the crankshaft 61 vibrates with respect to the cylinder head 63 in a plane parallel to the two cylinder axes AS of the cylinder head 63 and the left-and-right direction of the motorcycle 100. This vibration is the bending vibration of the crankshaft 61. Here, the direction of the bending vibration of the crankshaft 61 is the direction in which the crankshaft 61 vibrates due to a bending moment generated in the crankshaft 61 during an operation of the engine 6A. The direction of the bending vibration of the crankshaft 61 of the present example is the direction parallel to the cylinder axes AS in a side view and orthogonal to the center axis (crank axis 61c) of the crankshaft 61 in a plan view.

When the bending vibration of the crankshaft 61 having a specific frequency (a frequency in a certain range including a 800 Hz, for example) is transmitted to part of the crankcase 62, noise may be generated due to vibration of the part of the crankcase 62. For example, when part of the outer surface of the crankcase 62 is repeatedly deformed in a concave shape and a convex shape due to the bending vibration of the crankshaft 61, a relatively large noise is likely to be generated. Alternatively, when the bending vibration of the crankshaft 61 having a specific frequency is transmitted to part of the frame members 12, 13 through the crankcase 62, noise may be generated due to vibration of part of the frame members 12, 13. Further, noise may be generated due to vibration of the side cover or the like attached to the frame members 12, 13. As such, in the motorcycle 100 according to the present embodiment, the dynamic damper 200 is provided in the crankcase 62 in order to efficiently reduce the vibration transmitted from the crankshaft 61 to another member such as the crankcase 62.

### <3> Crankcase 62 and Dynamic Damper 200

### (1) Outline of Configuration of Crankcase 62 and Dynamic Damper 200

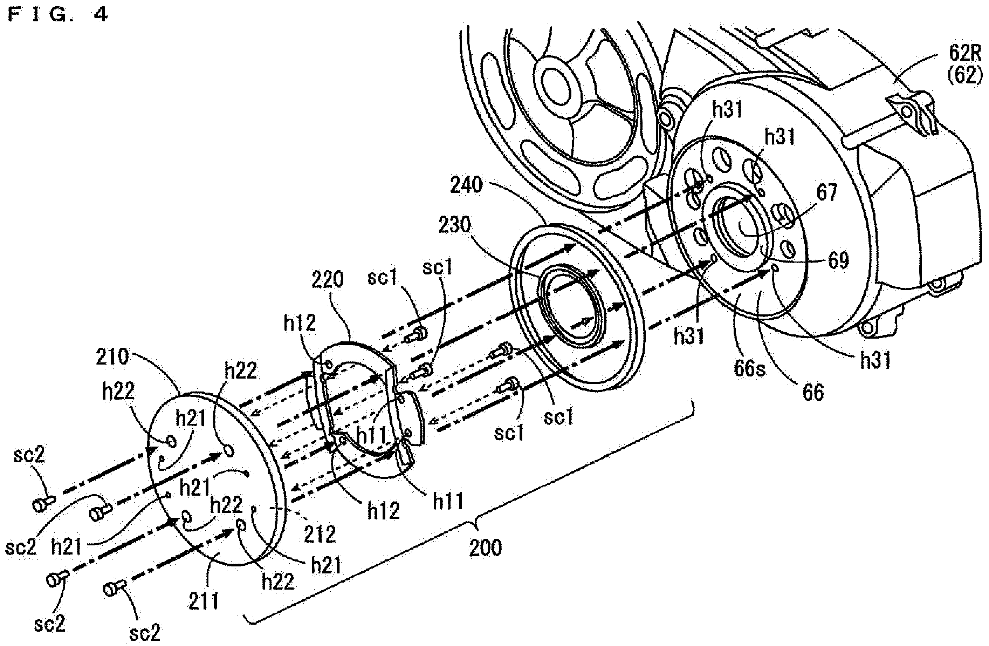

Fig. 4 is an exploded perspective view for explaining the configurations of the crankcase 62 and the dynamic damper 200 of Fig. 2. The crankcase 62 of Fig. 2 is constituted by a plurality of case members. The dynamic damper 200 is attached to a case member (hereinafter referred to as a right case member 62R) directed rightwardly of the motorcycle 100 among the plurality of case members of the crankcase 62.)

### (2) Right Case Member 62R of Crankcase 62

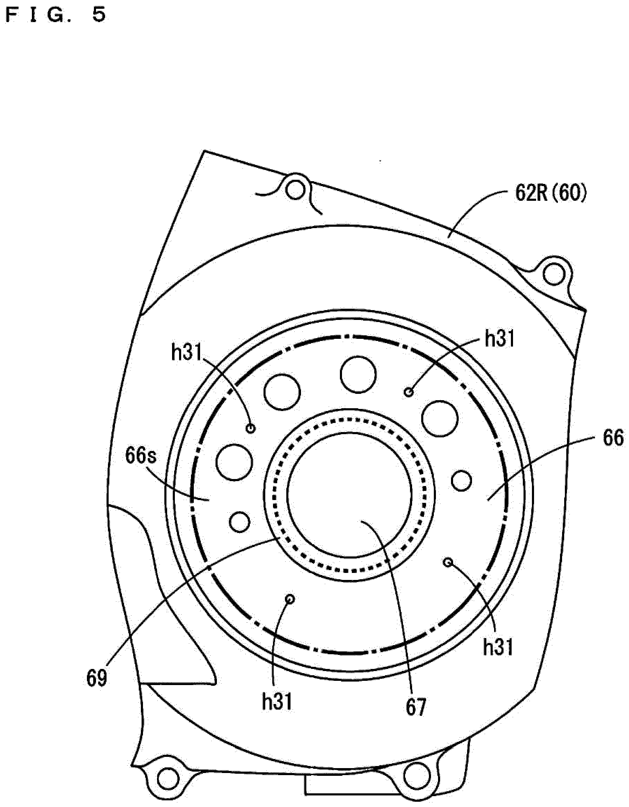

Fig. 5 is a partially enlarged side view of the right case member 62R of Fig. 4. As shown in Fig. 5, a bearing fixing portion 66 is provided at the right case member 62R. A bearing opening 67 is formed in the center portion of the bearing fixing portion 66. The bearing opening 67 is a circular opening through which the right end portion of the crankshaft 61 can be inserted.

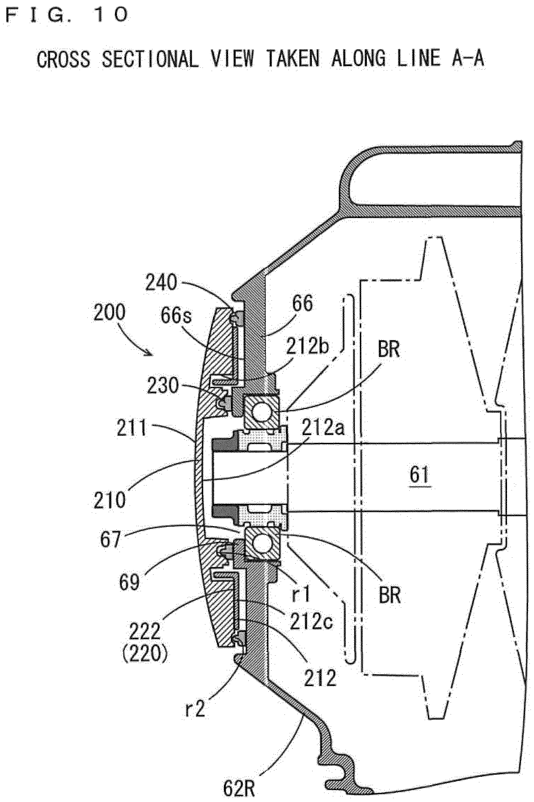

The bearing fixing portion 66 has an annular bearing fitting portion 69 at the inner edge of the bearing opening 67 and its peripheral portion. The bearing fitting portion 69 is formed such that a bearing BR (Fig. 10), described below, can be fitted to the bearing fitting portion 69 from the inside of the crankcase 62. Further, the bearing fixing portion 66 has a substantially annular flat attachment surface 66s that surrounds the bearing opening 67 and the bearing fitting portion 69 and is directed rightwardly of the motorcycle 100.

Four screw holes h31 that open rightwardly of the motorcycle 100 are formed in the bearing fixing portion 66. The four screw holes h31 are arranged in a dispersed manner at equal angular intervals about the center of the bearing opening 67 so as to surround the bearing opening 67 and the bearing fitting portion 69.

When the dynamic damper 200 is attached to the right case member 62R, a rubber member 230 of Fig. 4, described below, is provided on the surface of the bearing fitting portion 69 that faces rightwardly as indicated by the thick dotted line in Fig. 5. Further, as indicated by the thick one-dot and dash line in Fig. 5, a rubber member 240 of Fig. 4, described below, is provided in the vicinity of the outer peripheral end portion of the attachment surface 66s. Further, four screws sc2 of Fig. 4, described below, are attached to the four screw holes h31.

### (3) Configuration of Each Component of Dynamic Damper 200

As shown in Fig. 4, the dynamic damper 200 includes a damper mass 210, a support member (supporter) 220 and the rubber members 230, 240. The (first) rubber member 230 is an annular member such as an O-ring, and has an inner diameter and an outer diameter corresponding to the bearing fitting portion 69 of the right case member 62R. The (second) rubber member 240 is an annular member made of rubber such as an O-ring, and has an inner diameter larger than that of the rubber member 230 and an outer diameter slightly smaller than that of the attachment surface 66s of the right case member 62R. The functions of the rubber member 230 and the rubber member 240 will be described below.

The damper mass 210 is a substantially disc-shaped member made of metal such as aluminum or stainless steel. The outer diameter of the damper mass 210 is equal to the outer diameter of the rubber member 240 or slightly larger than the outer diameter of the rubber member 240. One surface and the other surface of the damper mass 210 facing in the mutually opposite directions are respectively referred to as an outer surface 211 and an inner surface 212 of the damper mass 210.

When the dynamic damper 200 is attached to the right case member 62R, the outer surface 211 of the damper mass 210 faces in a direction opposite to the right case member 62R (rightwardly). Further, the outer surface 211 of the damper mass 210 is formed so as to gradually bulge from the outer peripheral end portion to the center portion of the damper mass 210. On the other hand, when the dynamic damper 200 is attached to the right case member 62R, the inner surface 212 of the damper mass 210 faces the attachment surface 66s of the right case member 62R.

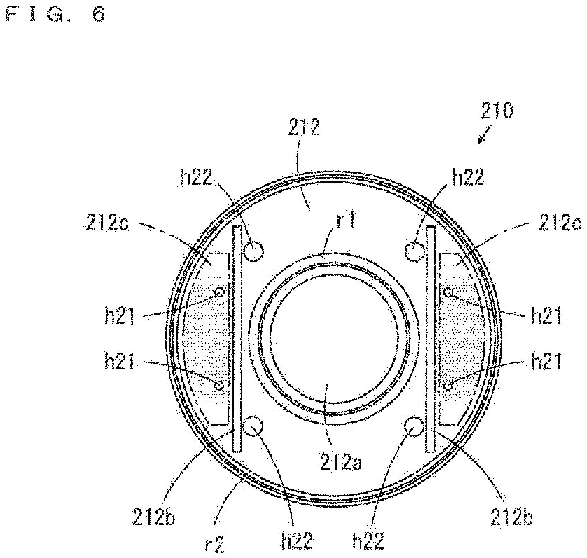

Fig. 6 is a diagram showing the inner surface 212 of the damper mass 210. As shown in Fig. 6, a circular concave portion 212a is formed at the center of the inner surface 212 of the damper mass 210. Further, an annular closing portion r1 is formed so as to surround the concave portion 212a. The concave portion 212a has an inner diameter which is equal or substantially equal to the inner diameter of the bearing opening 67 of the right case member 62R of Fig. 5.

The concave portion 212a is formed to be capable of accommodating the right end portion of the crankshaft 61 that projects rightwardly from the right case member 62R, as described below, with the dynamic damper 200 attached to the right case member 62R. The annular closing portion r1 has an annular groove to which part of the rubber member 230 of Fig. 4 can be fitted, and has inner and outer diameters corresponding to the bearing fitting portion 69 of the right case member 62R of Fig. 5. When the dynamic damper 200 is attached to the right case member 62R, the rubber member 230 of Fig. 4 is provided so as to overlap with the annular groove of the annular closing portion r1.

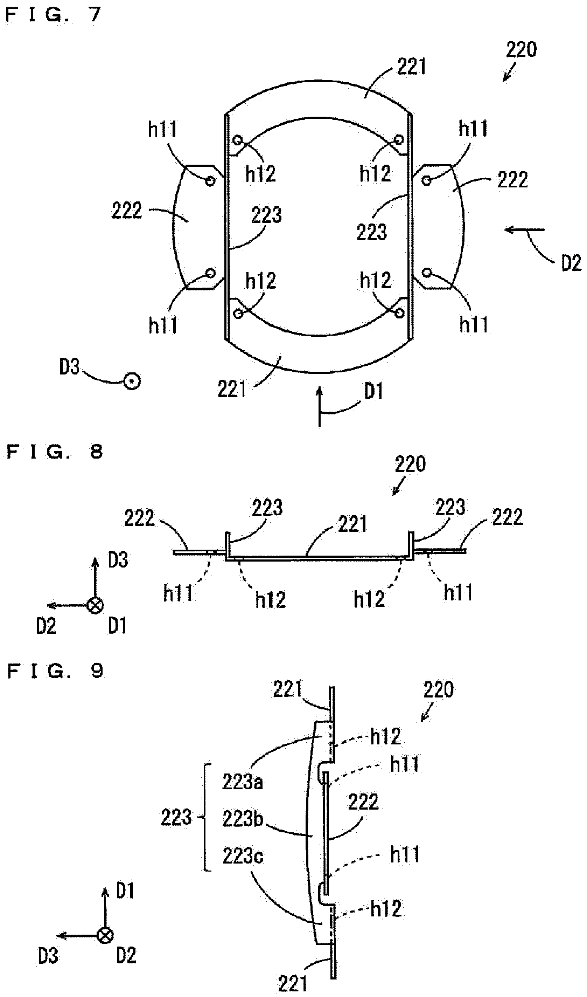

In the inner surface 212 of the damper mass 210, two groove portions 212b are formed so as to interpose the concave portion 212a and the annular closing portion r1 therebetween. Each of the two groove portions 212b extends linearly and is formed so as to be capable of accommodating part of a leaf spring portion (elastic object) 223 (Fig. 7), described below, of the support member 220 of Fig. 4.

In the inner surface 212 of the damper mass 210, an annular closing portion r2 is formed in a region having a certain width and including the outer peripheral end portion of the damper mass 210. The annular closing portion r2 has an annular groove to which part of the rubber member 240 of Fig. 4 can be fitted. When the dynamic damper 200 is attached to the right case member 62R, the rubber member 240 of Fig. 4 is provided so as to overlap with the annular groove of the annular closing portion r2.

In the inner surface 212 of the damper mass 210, two supported surfaces 212c are formed in a region except for the region between the two groove portions 212b and the annular closing portion r2. In Fig. 6, the two supported surfaces 212c are indicated by the one-dot and dash lines. One supported surface 212c is formed at a position outward of the concave portion 212a and between one groove portion 212b and one portion (arc-shaped portion) of the annular closing portion r2. The other supported surface 212c is formed at a position outward of the concave portion 212a and between the other groove portion 212b and the other portion (arc-shaped portion) of the annular closing portion r2. The two supported surfaces 212c are formed flat. When the dynamic damper 200 is attached to the right case member 62R, two damper mass connecting portions 222 (Fig. 7), described below, of the support member 220 of Fig. 4 abut against the two supported surfaces 212c, respectively. In Fig. 6, the dotted pattern is applied to the portions of the two supported surfaces 212c against which the two damper mass connecting portions 222 (Fig, 7), described below, abut.

Eight through holes extending from the outer surface 211 to the inner surface 212 are formed in the damper mass 210. Four through holes h22 out of the eight through holes are arranged in a dispersed manner at equal angular intervals about the center of the concave portion 212a so as to surround the concave portion 212a and the annular closing portion r1 in the region between the two groove portions 212b. These four through holes h22 respectively correspond to the four screw holes h31 (Fig. 5) of the right case member 62R, and have a common inner diameter into which each entire screw sc2 (including head portion) out of the four screws sc2 (Fig. 4), described below, can be inserted.

The rest of the four through holes out of the eight through holes are four screw holes h21. The four screw holes h21 have a common inner diameter and a common inner peripheral surface shape. Two screw holes h21 are formed to be located in each of the two supported surfaces 212c. The four screw holes h21 are used to screw the support member 220 of Fig. 4 to the inner surface 212 of the damper mass 210. The four screw holes h21 do not have to penetrate the outer surface 211 and the inner surface 212 of the damper mass 210. The four screw holes h21 may open only in the inner surface 212.

As described above, in the dynamic damper 200, the support member 220 is attached to the inner surface 212 of the damper mass 210. In the present example, in the support member 220 of Fig. 4, the surface facing the inner surface 212 of the damper mass 210 is a front surface of the support member 220.

Fig. 7 is a front view of the support member 220 of Fig. 4. Here, in regard to the support member 220, in a front view of the support member 220, the direction indicated by the arrow D1 of Fig. 7 is defined as a first direction D1, and the direction indicated by the arrow D2 of Fig. 7 is defined as a second direction D2. The first direction D1 and the second direction D2 are orthogonal to each other. Further, the direction indicated by the arrow D3 of Fig. 7 orthogonal to the first direction D1 and the second direction D2 is defined as a third direction D3. Fig. 8 is a side view of the support member 220 of Fig. 7 as viewed in the first direction D1, and Fig. 9 is a side view of the support member 220 of Fig. 7 as viewed in the second direction D2.

The support member 220 is constituted by a single member made of metal, and is fabricated by a bending process, a thermal process and the like of a sheet metal cut out into a predetermined shape. As shown in Fig. 7, the support member 220 has a substantially annular shape in a front view, and is mainly constituted by two case connecting portions 221, two damper mass connecting portions 222 and the two leaf spring portions 223.

In the front view of the support member 220, the two case connecting portions 221 are formed to be arranged at a distance from each other in the first direction D1 and extend in the second direction D2. Each case connecting portion 221 has one surface and the other surface orthogonal to the third direction D3. Further, two through holes h12 are formed in each case connecting portion 221. The four through holes h12 of the two case connecting portions 221 correspond to the four screw holes h31 of the right case member 62R (Fig. 5), respectively. The inner diameter of each through hole h12 is larger than the outer diameter of the shaft portion of the screw sc2 and is smaller than the outer diameter of the head portion of the screw sc2 (Fig, 4), described below, attached to each screw hole h31.

In the front view of the support member 220, the two damper mass connecting portions 222 are formed to be arranged at a distance from each other in the second direction D2 and extend in the first direction D1. Each damper mass connecting portion 222 has one surface and the other surface orthogonal to the third direction D3. Further, two through holes h11 are formed in each damper mass connecting portion 222. The four through holes h11 of the two damper mass connecting portions 222 correspond to the four screw holes h21 (Fig. 6) of the damper mass 210, respectively. The inner diameter of each through hole h11 is larger than the outer diameter of the shaft portion of a screw sc1 and is smaller than the outer diameter of the head portion of the screw sc1, described below, attached to each screw hole h21.

In the front view of the support member 220, the two leaf spring portions 223 are formed so as to respectively connect the both end portions of the two case connecting portions 221. Further, the two leaf spring portions 223 are formed so as to respectively hold the two damper mass connecting portions 222 at positions between the two case connecting portions 221 in the first direction D1. The two damper mass connecting portions 222 are held at positions slightly deviated from the two case connecting portions 221 in the third direction D3.

As shown in Fig. 8, each leaf spring portion 223 is configured to be bent by 90 ° with respect to the case connecting portion 221 and the damper mass connecting portion 222. Therefore, each leaf spring portion 223 has one surface and the other surface orthogonal to the second direction D2.

As shown in Fig. 9, the leaf spring portion 223 has a first portion 223a, a second portion 223b and a third portion 223c arranged in the first direction D1. The first portion 223a and the third portion 223c of the leaf spring portion 223 are directly coupled to the two case connecting portions 221, respectively. Further, the second portion 223b of the leaf spring portion 223 is directly coupled to one damper mass connecting portion 222 at a position between the first portion 223a and the third portion 223c in the first direction D1. With such a configuration, in a case in which a force directed in the second direction D2 is exerted on the damper mass connecting portion 222 with the two case connecting portions 221 fixed, for example, the second portion 223b of the leaf spring portion 223 is locally bent by the elastic force. Thus, the damper mass connecting portion 222 moves in the second direction D2 with respect to the two case connecting portions 221.

### (4) Attachment of Dynamic Damper 200 to Crankcase 62

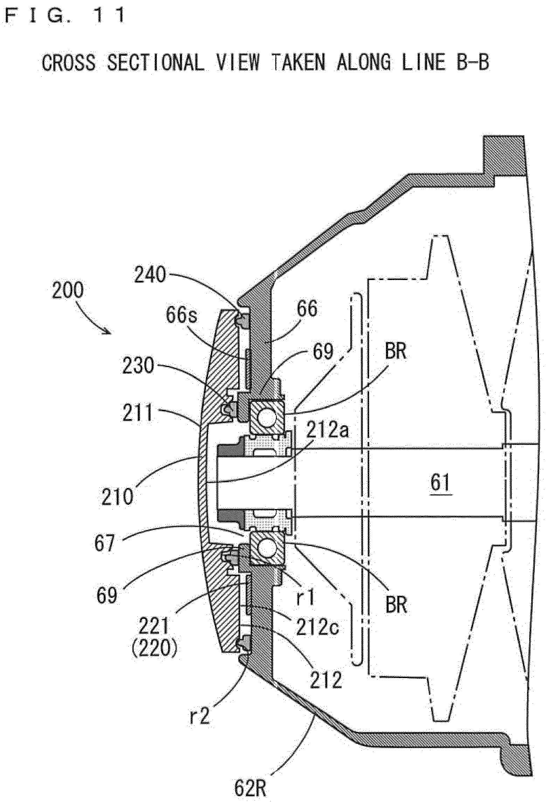

Fig. 10 is a cross sectional view taken along the line A-A of the power unit 6 of Fig. 2, and Fig. 11 is a cross sectional view taken along the line B-B of the power unit 6 of Fig. 2. The dynamic damper 200 is attached to the crankcase 62 as described below. As shown in Figs. 10 and 11, at a point in time at which attachment of the dynamic damper 200 to the crankcase 62 is started, the bearing BR is fitted to the bearing fitting portion 69 of the right case member 62R. Further, a portion in the vicinity of the right end portion of the crankshaft 61 is rotatably held at the right case member 62R. Further, the right end portion of the crankshaft 61 slightly projects outwardly (rightwardly) of the bearing fixing portion 66 through the bearing opening 67.

First, the support member 220 is positioned on the inner surface 212 of the damper mass 210, such that the two leaf spring portions 223 of Fig. 7 are accommodated in the two groove portions 212b of Fig. 6 and the four through holes h21 of Fig. 7 overlap with the four screw holes h21 of Fig. 6. In this state, as indicated by the dotted arrows in Fig. 4, the four screws sc1 are attached to the four screw holes h21 of the damper mass 210 through the four through holes h11 of the support member 220. Thus, as shown in Fig. 10, the two damper mass connecting portions 222 (Fig. 7) of the support member 220 are connected to the two supported surfaces 212c (Fig. 6) of the damper mass 210. In this case, the two case connecting portions 221 (Fig. 7) of the support member 220 are positioned such that the four through holes h12 are opposite to the four through holes h22 of the damper mass 210, respectively, with the two case connecting portions 221 of the support member 220 spaced apart from the inner surface 212 of the damper mass 210.

Next, the rubber member 230 is positioned on the surface, facing rightwardly, of the bearing fitting portion 69 of the right case member 62R. Further, the rubber member 240 is positioned in the vicinity of the outer peripheral end portion of the attachment surface 66s of the right case member 62R. In this state, the damper mass 210 is positioned on the attachment surface 66s of the right case member 62R such that the rubber member 230 and the rubber member 240 overlap with the annular closing portion r1 and the annular closing portion r2, respectively. Further, the damper mass 210 is positioned on the attachment surface 66s of the right case member 62R such that the four through holes h22 (Fig. 6) of the damper mass 210 overlap with the four screw holes h31 (Fig. 5) of the right case member 62R.

Thereafter, as indicated by the thick one-dot and dash arrows in Fig. 4, the four screws sc2 are respectively attached to the four screw holes h31 of the right case member 62R through the four through holes h22 of the damper mass 210 and the four through holes h12 of the support member 220. Thus, as shown in Fig. 11, the two case connecting portions 221 (Fig. 7) of the support member 220 are connected to the attachment surface 66s (Fig. 5) of the right case member 62R. In this manner, the dynamic damper 200 is attached to the bearing fixing portion 66 of the right case member 62R.

With the dynamic damper 200 attached to the crankcase 62, the right end portion of the crankshaft 61 projecting from the bearing opening 67 of the bearing fixing portion 66 is accommodated in the concave portion 212a of the damper mass 210. The rubber member 230 is provided between the annular closing portion r1 of the damper mass 210 and the bearing fitting portion 69 of the right case member 62R. Thus, the space around the right end portion of the crankshaft 61 surrounded by the damper mass 210 and the right case member 62R is closed by the rubber member 230 from the space outside of the power unit 6. Further, the rubber member 240 is further provided between the damper mass 210 and the attachment surface 66s of the right case member 62R so as to surround the rubber member 230. With such a configuration, in the power unit 6 of the present example, oil supplied to the right end portion of the crankshaft 61 is prevented from leaking from the inside of the crankcase 62 through the attachment portion of the dynamic damper 200.

### (5) Operation of Dynamic Damper 200

The above-mentioned dynamic damper 200 is attached to the crankcase 62 to absorb at least part of vibration transmitted from the crankshaft 61 to the crankcase 62. The operation of the dynamic damper 200 at this time will be described.

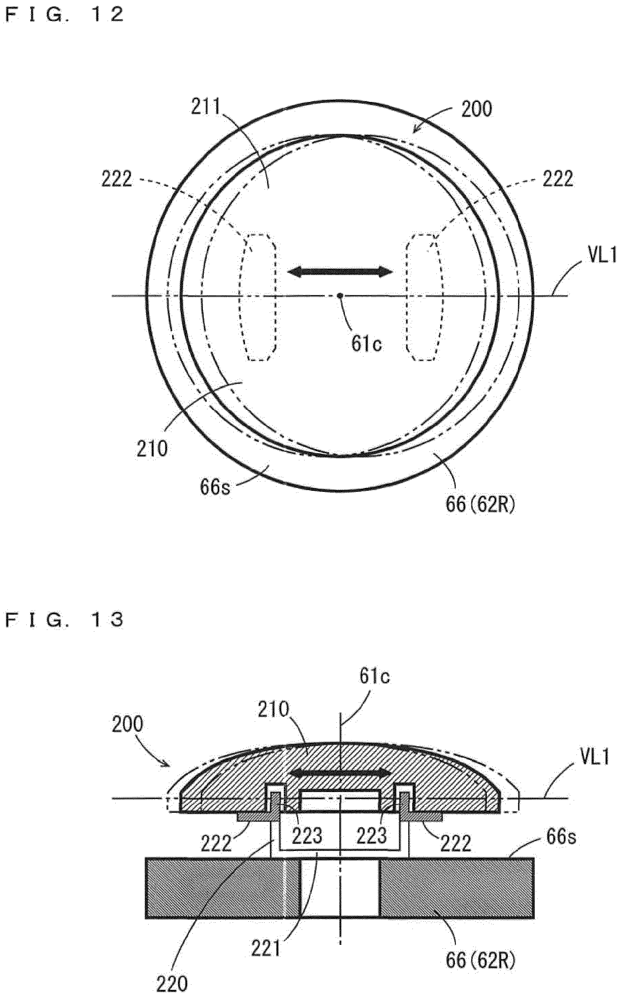

Figs. 12 and 13 are schematic views for explaining the operation of the dynamic damper 200 when the dynamic damper 200 absorbs the vibration transmitted from the crankshaft 61 to the crankcase 62. Fig. 12 is a schematic diagram of the dynamic damper 200 as viewed from a position opposite to the outer surface 211 of the damper mass 210. Fig. 13 is a cross sectional view of the dynamic damper 200 of Fig. 12 through the center of the dynamic damper 200 of Fig. 12. In Figs. 12 and 13, part of the constituent elements of the dynamic damper 200 is not shown in order to facilitate understanding of the operation of the dynamic damper 200. Further, the scales of dimensions of respective components in the dynamic damper 200 are different.

As indicated by the one-dot and dash lines in Figs. 12 and 13, one virtual straight line VL1 parallel to the direction of bending vibration of the crankshaft 61 and orthogonal to the crank axis (center axis of the crankshaft) 61c is defined. In this case, the two leaf spring portions 223 of the support member 220 are provided such that one surface and the other surface thereof are orthogonal to the virtual straight line VL1. Thus, the direction in which each leaf spring portion 223 can be deformed is limited to a plane substantially parallel to the crank axis 61c and the virtual straight line VL1. Further, as shown in Fig. 12, the support member 220 is attached to the attachment surface 66c such that the two damper mass connecting portions 222 are arranged at a distance from each other on the virtual straight line VL1 as viewed in the direction extending along the crank axis 61c.

In these cases, the direction in which the damper mass 210 can be moved is restricted to the direction extending along the virtual straight line VL1 by the two damper mass connecting portions 222 and the two leaf spring portions 223. Therefore, as indicated by the thick solid arrows in Figs. 12 and 13, when bending vibration is generated in the crankshaft 61, the damper mass 210 vibrates on the virtual straight line VL1 and does not vibrate in a direction deviating from the virtual straight line VL1. Therefore, at least part of the bending vibration generated in the crankshaft 61 is efficiently absorbed by the vibration of the damper mass 210.

Further, the support member 220 is attached to the attachment surface 66s such that the crankshaft 61 is located between the two damper mass connecting portions 222 as viewed in the direction extending along the crank axis 61c. Further, the support member 220 is attached to the attachment surface 66s such that the crankshaft 61 is located between the two case connecting portions 221 as viewed in the direction extending along the crank axis 61c.

With such a configuration, the damper mass 210 overlaps with at least the crankshaft 61 on the virtual straight line VL as viewed in the direction extending along the crank axis 61c. Thus, instability of the center of gravity of the engine 6A due to the vibration of the damper mass 210 is suppressed as compared with a case in which the damper mass 210 is provided at a position greatly deviated from the crankshaft 61 as viewed in the direction extending along the crank axis 61c.

The frequency of vibration that can be attenuated by the dynamic damper 200 is an eigenvalue, and the eigenvalue is defined mainly based on the weight of the damper mass 210 and an elastic force of the leaf spring portion 223. Therefore, it is preferable that the weight of the damper mass 210 and the elastic force of the leaf spring portion 223 are defined such that the frequency of vibration that can be attenuated by the dynamic damper 200 matches a specific frequency band in advance. The specific frequency band is a frequency band that greatly contributes to noise at a higher level of noise generated from the motorcycle 100 during an operation of the engine 6A. It is preferable that the weight of the damper mass 210 and the elastic force of the leaf spring portion 223 are set, and the specific frequency band is selected, through an experiment or a simulation, for example.

### <4> Effects

(1) In the power unit 6 according to the present embodiment, the dynamic damper 200 is provided in the crankcase 62. In this case, because it is not necessary to directly provide the dynamic damper 200 in the crankshaft 61 which rotates at high speed, a degree of freedom in design and attachment of the dynamic damper 200 is improved, and fabrication of the power unit 6 is facilitated. Further, with the above-mentioned configuration, the damper mass 210 of the dynamic damper 200 vibrates on the virtual straight line VL1 parallel to the direction of the bending vibration of the crankshaft 61. Thus, vibration transmitted to the peripheral members of the crankshaft 61 due to the bending vibration of the crankshaft 61 is efficiently absorbed by the dynamic damper 200. Therefore, vibration of the crankcase 62 and its peripheral members due to the bending vibration of the crankshaft 61 is efficiently reduced. Alternatively, vibration of at least part of the frame members 12, 13 due to the bending vibration of the crankshaft 61 is efficiently reduced. As a result, the power unit 6 which is easily fabricated and in which generation of noise due to the bending vibration of the crankshaft 61 is reduced is realized.
(2) The dynamic damper 200 according to the above-mentioned embodiment includes the rubber members 230, 240 provided between the attachment surface 66s of the right case member 62R and the damper mass 210. In this case, as described above, each of the rubber members 230, 240 functions as a closing member that prevents oil in the crankcase 62 from leaking from the attachment portion of the dynamic damper 200. Further, the rubber members 230, 240 absorb part of vibration of the damper mass 210 when bending vibration is generated in the crankshaft 61. Thus, generation of noise due to excessive vibration of the damper mass 210 is suppressed.

### <5> Examples

It has been fabricated a power unit having the same configuration as that of the power unit 6 according to the above-mentioned embodiment as a power unit of a preferred example. Further, it has been fabricated a power unit having the same configuration as that of the power unit 6 according to the above-mentioned embodiment except that the above-mentioned dynamic damper 200 is not included, as a power unit of a comparative example.

Further, in regard to the power unit of the preferred example and the power unit of the comparative example, an engine has been operated under a predetermined common condition and measured the magnitude of generated noise having a wavelength in a specific range during the operation. As a result, it was confirmed that the level of noise generated from the power unit of the preferred example was lower than the level of noise generated from the power unit of the comparative example.

### <6> Other Embodiments

(1) While the dynamic damper 200 is provided in the portion of the right case member 62R that covers the right end portion of the crankshaft 61 in the power unit 6 according to the above-mentioned embodiment, the present teaching is not limited to this. The dynamic damper 200 may be provided in a portion of the right case member 62R that is spaced apart from the crankshaft 61. For example, the dynamic damper 200 may be provided in any one of the front end portion, the upper end portion, the lower end portion and the rear end portion of the crankcase 62. Also in these cases, since the vibration direction of the damper mass 210 is limited to the direction of bending vibration of the crankshaft 61, the similar effect to that in the above-mentioned embodiment can be obtained.
(2) While the one dynamic damper 200 is provided at the engine 6A in the power unit 6 according to the above-mentioned embodiment, the present teaching is not limited to this. In the power unit 6, not only one dynamic damper 200 but two or three dynamic dampers 200 may be provided. For example, in the above-mentioned power unit 6, a new dynamic damper 200 may be provided in a left side portion of the crankcase 62.
(3) In the dynamic damper 200 according to the above-mentioned embodiment, the two leaf spring portions 223 of the support member 220 are arranged in the direction of the bending vibration of the crankshaft 61 in a side view of the motorcycle 100. Thus, the vibration direction of the damper mass 210 is restricted to the direction extending along the one virtual straight line VL1 parallel to the direction of the bending vibration of the crankshaft 61. However, according to the present teaching, the configuration for restricting the vibration direction of the damper mass 210 is not limited to the above-mentioned example. The dynamic damper 200 may have the following configuration instead of the above-mentioned support member 220.
   In the above-mentioned right case member 62R, a guide shaft extending along the one virtual straight line VL1 is provided, for example. Further, the damper mass 210 is provided on the guide shaft to be movable in the direction extending along the guide shaft. Further, the damper mass 210 is allowed to move along the guide shaft in a certain range, and an elastic object (a coil spring, for example) that supports the damper mass 210 at part of the guide shaft or part of the right case member 62R is provided. Even in a case in which such a configuration is provided in the crankcase 62, the vibration direction of the damper mass 210 can be restricted to the direction of the bending vibration of the crankshaft 61. Thus, similar effects to that of the above-mentioned embodiment can be obtained.
(4) While the dynamic damper 200 according to the above-mentioned embodiment has the two rubber members 230, 240, the present teaching is not limited to this. For example, in a case in which oil in the crankcase 62 is prevented from leaking to the outside of the power unit 6 by a configuration other than the dynamic damper 200, the dynamic damper 200 does not have to include at least one of the two rubber members 230, 240.
(5) There is also a power unit of a straddled vehicle that has a configuration in which a crankshaft and a plurality of motive power transmission members attached to the crankshaft are individually accommodated in a plurality of casings integrally connected to one another, for example. For example, there is a configuration in which a casing accommodating a crankshaft and a casing accommodating a belt-type continuously variable transmission (CVT) attached to the crankshaft are integrally connected to each other. Alternatively, there is a configuration in which a casing accommodating a crankshaft and a casing accommodating a drive shaft attached to the crankshaft are integrally connected to each other. Alternatively, there is a configuration in which a casing accommodating a crankshaft and a casing accommodating a clutch attached to the crankshaft are integrally connected to each other. In such a configuration, a plurality of integrally connected casings may be regarded as the crankcase according to the present teaching, and the dynamic damper according to the above-mentioned embodiment may be provided in at least one of the plurality of casings. Also in this case, because a plurality of casings constituting a power unit are integrally connected to one another, the similar effect to that of the above-mentioned embodiment can be obtained.
(6) While the support member 220 that supports the damper mass 210 at the right case member 62R is constituted by the single member including the two leaf spring portions 223 in the dynamic damper 200 according to the above-mentioned embodiment, the present teaching is not limited to this. As the configuration for supporting the damper mass 210 at the right case member 62R, the support member 220 may be divided into two members such that the two leaf spring portions 223 are spaced apart from each other.
   That is, the dynamic damper 200 may include two support members including two leaf spring members instead of the above-mentioned support member 220. In this case, one portion of the damper mass 210 is supported at one portion of the right case member 62R by one leaf spring member, for example. Further, another portion of the damper mass 210 is supported at another portion of the right case member 62R by the other leaf spring member. Further, the arrangement and posture of the two leaf spring members are adjusted such that the vibration direction of the damper mass 210 is parallel to the direction of the bending vibration of the crankshaft 61. Thus, similar effects to that of the above-mentioned embodiment can be obtained.
(7) In the dynamic damper 200 according to the above-mentioned embodiment, a weight adjustment member for adjusting the weight of the damper mass 210 may be attached to the damper mass 210. In this case, a screw hole for a weight member to which a plurality of types of weight members can be screwed, for example, may be formed in the damper mass 210. Thus, a weight member having a desired weight can be easily attached to or detached from the damper mass 210.
(8) While the engine 6A according to the above-mentioned embodiment includes the cylinder head 63 in which the two cylinders are arranged in the left-and-right direction of the motorcycle 100, the present teaching is not limited to this. The engine 6A may be configured to include only one cylinder or may be configured to include three, four or more than four cylinders. Further, the configuration of the engine 6A is not limited to the above-mentioned example, and the engine 6A may be configured such that one cylinder or three or more than three cylinders are arranged in the left-and-right direction of the motorcycle 100. Alternatively, the engine 6A may be configured such that one or a plurality of cylinders are arranged in the front-and-rear direction of the motorcycle 100. Further, the engine 6A may be configured such that four cylinders are arranged in a matrix in a plan view, or may be configured such that a plurality of cylinders are arranged in a V shape in a side view.
   Although varying depending on the configuration of the engine 6A, the direction of the bending vibration generated in the crankshaft 61 can be derived from a predetermined dimension of each component. Therefore, even in a case in which the number and arrangement of the cylinders in the engine 6A are different from those in the example of the above-mentioned embodiment, the dynamic damper 200 can be attached to the crankcase 62 such that the damper mass 210 vibrates in the direction of bending vibration.
(9) While the above-mentioned embodiment is an example in which the present teaching is applied to a motorcycle, the present teaching is not limited to this. The present teaching may be applied to another straddled vehicle such as a four-wheeled automobile, a motor tricycle or an ATV (All Terrain Vehicle).

### <7> Correspondences Between Constituent Elements in Claims and Parts in Preferred Embodiments

In the following paragraphs, non-limiting examples of correspondences between various elements recited in the claims below and those described above with respect to various preferred embodiments of the present disclosure are explained.

In the above-mentioned embodiment, the crankshaft 61 is an example of a crankshaft, the crankcase 62 is an example of a crankcase, the dynamic damper 200 is an example of a dynamic damper, the damper mass 210 is an example of a damper mass, the virtual straight line VL1 is an example of one straight line, the support member 220 is an example of a support member and the power unit 6 and the engine 6A are examples of an engine.

Further, the crank axis 61c is an example of a center axis of a crankshaft, the attachment surface 66s of the right case member 62R is an example of an attachment surface, one leaf spring portion 223 of the two leaf spring portions 223 of the support member 220 is an example of a first leaf spring portion, the other leaf spring portion 223 of the two leaf spring portions 223 of the support member 220 is an example of a second leaf spring portion, one case connecting portion 221 of the two case connecting portions 221 of the support member 220 is an example of a first portion, and the other case connecting portion 221 of the two case connecting portions 221 of the support member 220 is an example of a second portion.

Further, one surface and another surface of each of the leaf spring portions 223 of the support member 220 are examples of one surface and another surface facing in mutually opposite directions of each of the first leaf spring portion and the second leaf spring portion, the rubber members 230, 240 are examples of a rubber member, the bearing BR is an example of a bearing, the bearing fixing portion 66 of the right case member 62R is an example of a fixing portion, the rear wheel 8 is an example of a drive wheel, the entire motorcycle 100 excluding the power unit 6 is an example of a main body, and the motorcycle 100 is an example of a straddled vehicle.

## Claims

1. An engine (6A) comprising:
a crankshaft (61);
a crankcase (62) accommodating the crankshaft (61); and
a dynamic damper (200) provided at the crankcase (62), wherein
the dynamic damper (200) includes
a damper mass (210), and
a supporter (220) that has at least one elastic object (223), and vibratably supports the damper mass (210) at the crankcase (62) such that the damper mass (210) is vibratable by the elastic object (223) on one straight line (VL1) that is orthogonal to a center axis (61c) of the crankshaft (61) and parallel to a direction of bending vibration generated in the crankshaft (61), **characterized in that**
the supporter (220) vibratably supports the damper mass (210) at the crankcase (62) such that an elastic force of the elastic object (223) is exerted on the damper mass (210) on the one straight line (VL1), while the supporter (220) restricts a vibration direction of the damper mass (210) such that the damper mass (210) is not vibratable on another straight line that intersects with the one straight line (VL1).

2. The engine (6A) according to claim 1, **characterized in that** the supporter (220) has a first leaf spring portion (223) and a second leaf spring portion (223) as the elastic object,
the first leaf spring portion (223) and the second leaf spring portion (223) are provided at the crankcase (62) to be arranged at a distance from each other in a direction parallel to the one straight line (VL1), and
each of the first leaf spring portion (223) and the second leaf spring portion (223) is provided to connect the crankcase (62) and the damper mass (210) to each other.

3. The engine (6A) according to claim 2, **characterized in that** each of the first leaf spring portion (223) and the second leaf spring portion (223) is formed in a flat plate shape having one surface and another surface that face in mutually opposite directions, and is provided at the crankcase (62) such that the one surface and the another surface are orthogonal to the one straight line (VL1).

4. The engine (6A) according to any one of claims 1 to 3, **characterized in that** the crankcase (62) has an attachment surface (66s) that is orthogonal to a center axis (61c) of the crankshaft (61).

5. The engine (6A) according to claim 4, **characterized in that** the supporter (220) has a first portion (221) and a second portion (221) attached to the attachment surface (66s), and
the crankshaft (61) is located in a region between a portion to which the first portion (221) of the supporter (220) is attached in the attachment surface (66s) and a portion to which the second portion (221) of the supporter (220) is attached in the attachment surface (66s) when being viewed in a direction extending along the center axis (61c) of the crankshaft (61).

6. The engine (6A) according to claim 4 or 5, **characterized in that** the dynamic damper (200) further includes at least one rubber member (230, 240) provided between the attachment surface (66s) of the crankcase (62) and the damper mass (210).

7. The engine (6A) according to claim 6, **characterized in that** a first rubber member (230) is an annular member such as an O-ring, and a second rubber member (240) is an annular member made of rubber such as an O-ring as the rubber member.

8. The engine (6A) according to any one of claims 1 to 7, **characterized by** a bearing (BR) that supports the crankshaft (61) in the crankcase (62), wherein
the crankcase (62) has a fixing portion (66) to which the bearing (BR) is fixed, and the dynamic damper (200) is attached to the fixing portion (66).

9. The engine (6A) according to claim 6, 7 and 8, **characterized in that** the first rubber member (230) has an inner diameter and an outer diameter corresponding to a bearing fitting portion (69) of the fixing portion (66) of the crankcase (62), and the second rubber member (240) has an inner diameter larger than that of the first rubber member (230) and an outer diameter slightly smaller than that of the attachment surface (66s) of the crankcase (62).

10. A straddled vehicle (100) comprising:
a main body having a drive wheel (8); and
the engine (6A) according to any one of claims 1 to 9 that is configured to generate motive power for rotating the drive wheel (8).

## Patentansprüche

1. Ein Motor (6A), der umfasst:
eine Kurbelwelle (61);
ein Kurbelgehäuse (62), das die Kurbelwelle (61) aufnimmt; und
einen dynamischen Dämpfer (200), der am Kurbelgehäuse (62) vorgesehen ist,
wobei der dynamische Dämpfer (200) enthält
eine Dämpfermasse (210) und
eine Stütze (220) mit zumindest einem elastischen Objekt (223), die die Dämpfermasse (210) am Kurbelgehäuse (62) so schwingungsfähig stützt, dass die Dämpfermasse (210) durch das elastische Objekt (223) auf einer geraden Linie (VL1) in Schwingung versetzt werden kann, die orthogonal zu einer Mittelachse (61c) der Kurbelwelle (61) und parallel zu einer Richtung der in der Kurbelwelle (61) erzeugten Biegeschwingung verläuft, **dadurch gekennzeichnet, dass**
die Stütze (220) die Dämpfermasse (210) am Kurbelgehäuse (62) so schwingend stützt, dass eine elastische Kraft des elastischen Objekts (223) auf die Dämpfermasse (210) auf der einen geraden Linie (VL1) ausgeübt wird, während die Stütze (220) eine Schwingungsrichtung der Dämpfermasse (210) derart einschränkt, dass die Dämpfermasse (210) auf einer anderen Geraden, die die eine Gerade (VL1) schneidet, nicht schwingungsfähig ist.

2. Der Motor (6A) gemäß Anspruch 1, **dadurch gekennzeichnet, dass** die Stütze (220) einen ersten Blattfederabschnitt (223) und einen zweiten Blattfederabschnitt (223) als elastisches Objekt aufweist, wobei
der erste Blattfederabschnitt (223) und der zweite Blattfederabschnitt (223) am Kurbelgehäuse (62) vorgesehen sind, um in einem Abstand voneinander in einer Richtung parallel zu der einen gerade Linie (VL1) angeordnet zu sein, und
der erste Blattfederabschnitt (223) und der zweite Blattfederabschnitt (223) jeweils vorgesehen sind, um das Kurbelgehäuse (62) und die Dämpfermasse (210) miteinander zu verbinden.

3. Der Motor (6A) gemäß Anspruch 2, **dadurch gekennzeichnet, dass** sowohl der erste Blattfederabschnitt (223) als auch der zweite Blattfederabschnitt (223) in Form einer flachen Platte ausgebildet sind, die eine Oberfläche und eine andere Oberfläche aufweist, die einander gegenüberliegen, und am Kurbelgehäuse (62) so vorgesehen sind, dass die eine Oberfläche und die andere Oberfläche orthogonal zu der einen geraden Linie (VL1) senkrecht stehen.

4. Der Motor (6A) gemäß irgendeinem der Ansprüche 1 bis 3, **dadurch gekennzeichnet, dass** das Kurbelgehäuse (62) eine Befestigungsfläche (66s) aufweist, die senkrecht zu einer Mittelachse (61c) der Kurbelwelle (61) steht.

5. Der Motor (6A) gemäß Anspruch 4, **dadurch gekennzeichnet, dass** die Stütze (220) einen ersten Abschnitt (221) und einen zweiten Abschnitt (221) aufweist, die an der Befestigungsfläche (66s) befestigt sind, und
die Kurbelwelle (61) in einem Bereich zwischen einem Abschnitt, an dem der erste Abschnitt (221) der Stütze (220) an der Befestigungsfläche (66s) befestigt ist, und einem Abschnitt, an dem der zweite Abschnitt (221) der Stütze (220) an der Befestigungsfläche (66s) befestigt ist, wenn man in einer Richtung betrachtet, die sich entlang der Mittelachse (61c) der Kurbelwelle (61) erstreckt.

6. Der Motor (6A) gemäß Anspruch 4 oder 5, **dadurch gekennzeichnet, dass** der dynamische Dämpfer (200) ferner zumindest ein Gummielement (230, 240) enthält, das zwischen der Befestigungsfläche (66s) des Kurbelgehäuses (62) und der Dämpfermasse (210) vorgesehen ist.

7. Der Motor (6A) gemäß Anspruch 6, **dadurch gekennzeichnet, dass** ein erstes Gummielement (230) ein ringförmiges Element wie ein O-Ring ist und ein zweites Gummielement (240) ein ringförmiges Element aus Gummi wie ein O-Ring als Gummielement ist.

8. Der Motor (6A) gemäß irgendeinem der Ansprüche 1 bis 7, **gekennzeichnet durch** ein Lager (BR), das die Kurbelwelle (61) im Kurbelgehäuse (62) lagert, wobei
das Kurbelgehäuse (62) einen Befestigungsabschnitt (66) aufweist, an dem das Lager (BR) befestigt ist, und
der dynamische Dämpfer (200) an dem Befestigungsabschnitt (66) angebracht ist.

9. Der Motor (6A) gemäß Anspruch 6, 7 und 8, **dadurch gekennzeichnet, dass** das erste Gummielement (230) einen Innendurchmesser und einen Außendurchmesser aufweist, die einem Lagerpassabschnitt (69) des Befestigungsabschnitts (66) des Kurbelgehäuses (62) entsprechen, und das zweite Gummielement (240) einen Innendurchmesser aufweist, der größer ist als der des ersten Gummielements (230), und einen Außendurchmesser, der etwas kleiner ist als der der Befestigungsfläche (66s) des Kurbelgehäuses (62).

10. Ein Spreizsitzfahrzeug (100), das umfasst:
einen Hauptkörper mit einem Antriebsrad (8); und
den Motor (6A) gemäß irgendeinem der Ansprüche 1 bis 9, der so konfiguriert ist, dass er Antriebskraft zum Drehen des Antriebsrads (8) erzeugt.

## Revendications

1. Moteur (6A) comprenant :
un vilebrequin (61) ;
un carter (62) logeant le vilebrequin (61) ; et
un amortisseur dynamique (200) prévu sur le carter (62), dans lequel
l'amortisseur dynamique (200) inclut
une masse d'amortissement (210), et
un support (220) ayant au moins un objet élastique (223) et supportant de manière vibrante la masse d'amortissement (210) au niveau du carter (62) de sorte que la masse d'amortissement (210) soit vibrable par l'objet élastique (223) sur une ligne droite (VL1) orthogonale à un axe central (61c) du vilebrequin (61) et parallèle à une direction de vibration de flexion générée dans le vilebrequin (61), **caractérisé en ce que**
le support (220) soutient vibratoirement la masse d'amortissement (210) au niveau du carter (62) de sorte qu'une force élastique de l'objet élastique (223) est exercée sur la masse d'amortissement (210) sur la ligne droite (VL1), tandis que le support (220) restreint une direction de vibration de la masse d'amortissement (210) de sorte que la masse d'amortissement (210) n'est pas vibrable sur une autre ligne droite qui croise la ligne droite (VL1).

2. Moteur (6A) selon la revendication 1, **caractérisé en ce que** le support (220) a une première partie de ressort à lames (223) et une deuxième partie de ressort à lames (223) comme l'objet élastique,
la première partie de ressort à lames (223) et la deuxième partie de ressort à lames (223) sont prévues sur le carter (62) pour être agencées à une certaine distance l'une de l'autre dans une direction parallèle à la ligne droite (VL1), et
la première partie de ressort à lames (223) et la deuxième partie de ressort à lames (223) sont prévues pour connecter le carter (62) et la masse d'amortissement (210) l'un à l'autre.

3. Moteur (6A) selon la revendication 2, **caractérisé en ce que** chacune de la première partie de ressort à lames (223) et de la deuxième partie de ressort à lames (223) est formée dans une forme de plaque plate ayant une surface et une autre surface qui font face dans des directions mutuellement opposées, et est prévue au niveau du carter (62) de telle sorte qu'une surface et une autre surface sont orthogonales à la ligne droite (VL1).

4. Moteur (6A) selon l'une quelconque des revendications 1 à 3, **caractérisé en ce que** le carter (62) a une surface de fixation (66s) qui est orthogonale à un axe central (61c) du vilebrequin (61).

5. Moteur (6A) selon la revendication 4, **caractérisé en ce que** le support (220) a une première partie (221) et une deuxième partie (221) fixées à la surface de fixation (66s), et **en ce que**
le vilebrequin (61) est situé dans une région entre une partie à laquelle la première partie (221) du support (220) est fixée dans la surface de fixation (66s) et une partie à laquelle la deuxième partie (221) du support (220) est fixée dans la surface de fixation (66s) lorsqu'il est vu dans une direction s'étendant le long de l'axe central (61c) du vilebrequin (61).

6. Moteur (6A) selon la revendication 4 ou 5, **caractérisé en ce que** l'amortisseur dynamique (200) inclut en outre au moins un élément en caoutchouc (230, 240) prévu entre la surface de fixation (66s) du carter (62) et la masse d'amortissement (210).

7. Moteur (6A) selon la revendication 6, **caractérisé en ce qu'un** premier élément en caoutchouc (230) est un élément annulaire tel qu'un joint torique, et un deuxième élément en caoutchouc (240) est un élément annulaire en caoutchouc tel qu'un joint torique en tant qu'élément en caoutchouc.

8. Moteur (6A) selon l'une quelconque des revendications 1 à 7, **caractérisé par** un palier (BR) qui supporte le vilebrequin (61) dans le carter (62), dans lequel
le carter (62) a une partie de fixation (66) à laquelle le palier (BR) est fixé, et l'amortisseur dynamique (200) est fixé à la partie de fixation (66).

9. Moteur (6A) selon les revendications 6, 7 et 8, **caractérisé en ce que** le premier élément en caoutchouc (230) a un diamètre intérieur et un diamètre extérieur correspondant à une partie de montage de roulement (69) de la partie de fixation (66) du carter (62), et le deuxième élément en caoutchouc (240) a un diamètre intérieur supérieur à celui du premier élément en caoutchouc (230) et un diamètre extérieur légèrement inférieur à celui de la surface de fixation (66s) du carter (62).

10. Véhicule chevauché (100) comprenant :
un corps principal ayant une roue motrice (8) ; et
le moteur (6A) selon l'une quelconque des revendications 1 à 9 qui est configuré pour générer une force motrice pour faire tourner la roue motrice (8).
